# EUROPÄISCHE PATENTSCHRIFT

(11) **EP 1 090 235 B1**
(45) Veröffentlichungstag und Bekanntmachung des Hinweises auf die Patenterteilung: **19.06.2002**
(21) Anmeldenummer: 99926393.2
(22) Anmeldetag: 25.05.1999
(51) Int. Cl.: F16G 1/28, B60S 3/00

(54) **FAHRZEUGBEHANDLUNGSANLAGE UND BETRIEBSVERFAHREN**
VEHICLE TREATMENT INSTALLATION AND OPERATING METHOD
INSTALLATION DE TRAITEMENT DE VEHICULE ET SON PROCEDE DE FONCTIONNEMENT

(30) Priorität: 26.05.1998 DE 29809426 U; 05.11.1998 DE 29819722 U; 24.02.1999 DE 29903300 U
(43) Veröffentlichungstag der Anmeldung: 11.04.2001
(73) Patentinhaber: WashTec Holding GmbH, 86153 Augsburg (DE)
(72) Erfinder: DIETSCH, Wolfgang, D-60435 Frankfurt (DE); KLOS, Walter, D-58511 Lüdenscheid (DE); WINDEL, Günter, D-63825 Schöllkrippen-Schneppenbach (DE)
(74) Vertreter: Rapp, Bertram, Dr.
(86) Internationale Anmeldenummer: EP9903577
(87) Internationale Veröffentlichungsnummer: WO9961295

(56) Entgegenhaltungen:
- DE-U- 29 723 828
- PATENT ABSTRACTS OF JAPAN vol. 009, no. 286 (M-429), 13. November 1985 (1985-11-13) & JP 60 128047 A (TOUKIYOU TATSUNO:KK), 8. Juli 1985 (1985-07-08)
- PATENT ABSTRACTS OF JAPAN vol. 014, no. 083 (M-0936), 16. Februar 1990 (1990-02-16) & JP 01 297344 A (TOKYO TATSUNO CO LTD), 30. November 1989 (1989-11-30)
- PATENT ABSTRACTS OF JAPAN vol. 199, no. 502, 31. März 1995 (1995-03-31) & JP 06 321067 A (IGARI AKIRA), 22. November 1994 (1994-11-22)
- PATENT ABSTRACTS OF JAPAN vol. 199, no. 609, 30. September 1996 (1996-09-30) & JP 08 119071 A (YASUTAKE NOBUO), 14. Mai 1996 (1996-05-14)

## Beschreibung

Die Erfindung betrifft ein Verfahren zum Betrieb einer Fahrzeugbehandlungsanlage und eine Fahrzeugbehandlungsanlage mit den Merkmalen im Oberbegriff des Verfahrens- und Vorrichtungshauptanspruchs.

Eine solche Fahrzeugbehandlungsanlage ist aus der US-A-3,596,241 bekannt. Die hier gezeigte Portalwaschanlage hat eine mechanische Führungseinrichtung aus zwei bodenseitigen Leitschienen, die die Einfahrspur seitlich begrenzen und die die Fahrzeugräder seitlich führen. Zusätzlich ist eine Einfahrhilfe vorhanden, die aus mehreren von den Fahrzeugrädern betätigbaren elektrischen Schaltelementen und aus einer optischen Signaleinrichtung besteht. Die Schaltelemente sind in der einen Ausführungsform als elektrische Schaltfahnen ausgebildet, die in Abständen hintereinander an den Leitschienen befestigt sind. In der anderen Ausführungsform sind sie als elektrische Druckschaltstreifen ausgebildet, die parallel zu den Leitschienen im Anlagenboden montiert sind. Die elektrischen Schaltelemente sind in einem einfachen Stromkreis und in Parallelschaltung mit der Signaleinrichtung verbunden. Bei Betätigung eines elektrischen Schaltelementes wird der Stromkreis geschlossen, wodurch an der Signaleinrichtung ein mit diesem Stromkreis verbundener Leuchtpfeil aufleuchtet Die bekannte Einfahrhilfe gilt als Überfahrschutz für die Leitschienen, die bei einer Schrägfahrt des Fahrzeugs relativ leicht von den Fahrzeugrädern überrollt werden und signalisiert dem Fahrzeuglenker, daß er im Betätigungsfall aus der Einfahrspur gefahren und den Leitschienen zu nahe gekommen ist. Der Leuchtpfeil sagt dem Fahrzeuglenker, in welche Richtung er gegenlenken muß. Die Auffahrhilfe kann nur feststellen, ob ein oder mehrere Räder den Leitschienen zu nahe gekommen sind. Ob hierbei eine Schrägstellung des Fahrzeuges oder ein seitlicher Versatz bei gerader Einfahrtrichtung vorliegt, kann von der Einfahrhilfe nicht festgestellt werden. Die Einfahrhilfe umfaßt ferner noch elektrische Durckschalter im Anlagenboden am Ende der Einfahrspur, die ebenfalls mit der Signaleinrichtung verbunden sind und die dem Fahrzeuglenker signalisieren, wann er weit genug vorgefahren ist und das Fahrzeug abstellen kann. Die Leitschienen bilden Stolperschwellen und eine Unfallursache für den Fahrzeuglenker beim Verlassen und Besteigen des Fahrzeuges.

Die JP-A-60128047 zeigt eine andere Portalwaschanlage mit einer optischen Leiteinrichtung für den Fahrzeuglenker. Diese besteht aus vier parallelen Nagelreihen am Anlagenboden, die dem Fahrzeuglenker die linke und rechte Radspur signalisieren und zwischen denen er die Fahrzeugräder halten soll. Am Portal sind zusätzlich Spiegel angeordnet, mit denen der Fahrzeuglenker die im toten Winkel befindlichen Nagelreihen und die Fahrzeugräder sehen kann.

Die JP-A-06321067 zeigt eine elektrische Schalteinrichtung zur Feststellung der Endposition eines Fahrzeuges vor dem Portal. Hierbei wird nur wie in der eingangs genannten US-Schrift festgestellt, ob das Fahrzeug weit genug vor oder unter das Portal gefahren ist. Schrägstellungen oder ein Seitenversatz des Fahrzeuges beim Einfahren werden nicht ermittelt.

Die JP-A-01297344 zeigt eine andere passive Einfahrhilfe für eine Tankstelle, bei der die Zapfstellen am Tankstellendach angeordnet sind. Die Einfahrhilfe besteht aus mehreren Reihen von Lichtreflektoren am Anlagenboden, die die Radspuren signalisieren und die durch Lichtstrahler am Dach zu Leuchten gebracht werden.

Aus der DE-G-92 15 013 ist eine andere Einfahrhilfe für Kraftfahrzeuge an Garagen bekannt, die einen mit dem Fahrzeug mechanisch kuppelbaren Manipulator besitzt, der das Fahrzeug fahrerlos bzw. selbsttätig auf den Stellplatz schiebt. Eine solche Anordnung ist sehr aufwendig und läßt sich wegen der schwierigen Umgebungsbedingungen für Fahrzeugwaschanlagen nicht einsetzen.

Die JP-A-08-207713 zeigt eine aktive Einfahrhilfe mit einer berührungslos messenden "aktiven" Meßeinrichtung, welche dem Fahrzeuglenker Richtungs- und Korrekturhinweise übermittelt. Diese Einfahrhilfe kann auch zur Konturenerfassung und zur Steuerung und/oder Überwachung der Behandlungsprozesse bzw. der Fahrzeugbehandlungsanlage eingesetzt werden.

Es besteht daher die Aufgabe, ein gattungsgemäßes Verfahren und eine gattungsgemäße Fahrzeugbehandlungsanlage so weiterzubilden, daß eine bessere Positionierung und Ausrichtung des Fahrzeugs ermöglicht wird.

Gelöst wird diese Aufgabe mit den kennzeichnenden Merkmalen der Ansprüche 1 bzw. 2. Vorteilhafte Ausgestaltungen sind den Unteransprüchen entnehmbar.

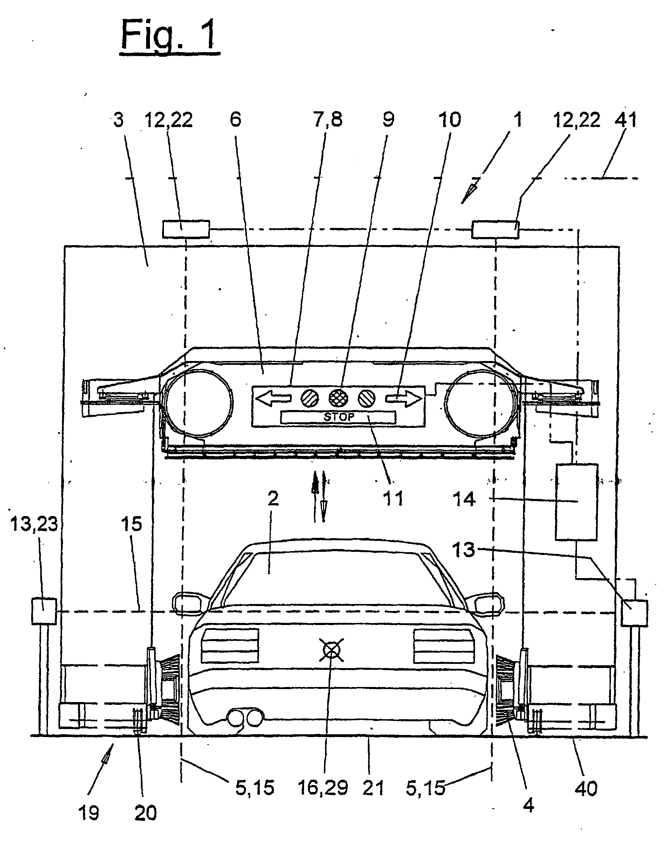

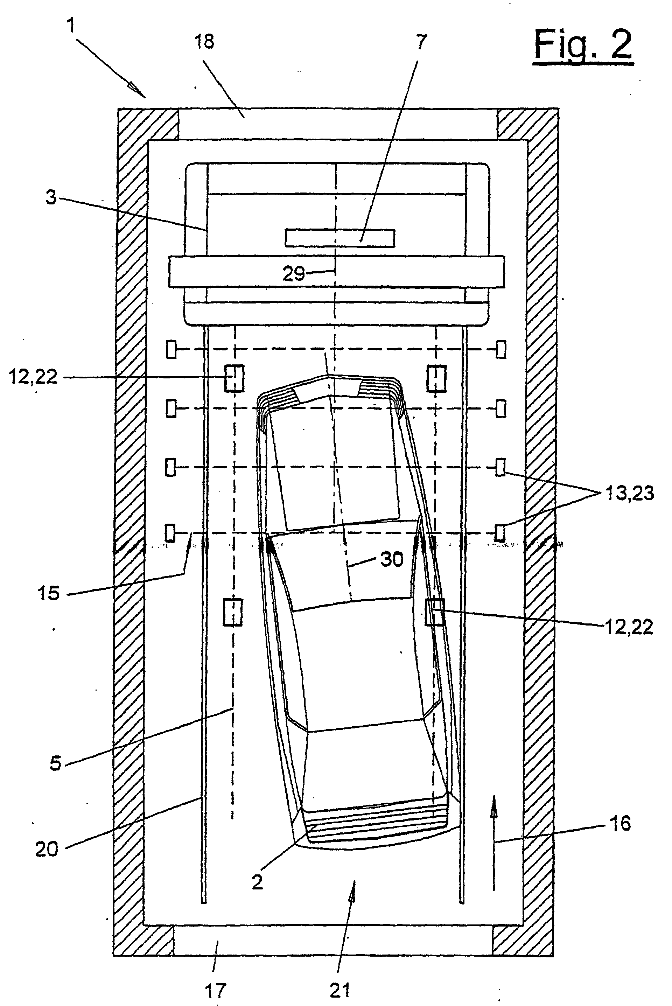

Ein Ausführungsbeispiel der Erfindung wird in den folgenden Zeichnungen 3 und 4 näher beschrieben. Die ebenfalls in Bezug genommenen Figuren 1 und 2, welche optische Sensoren statt einer Kamera zum Gegenstand haben, sind nicht Gegenstand der Erfindung, sondern dienen der Erläuterung des technischen Hintergrunds.
- Figur 1:: eine Fahrzeugwaschanlage mit einer aktiven Einfahrhilfe mit optischen Sensoren in Frontansicht,
- Figur 2:: die Anordnung von Figur 1 in Draufsicht,
- Figur 3:: eine Variante zu Figur 2 mit einer Kamera und
- Figur 4:: eine weitere Variante mit mehreren Kameras.

Figur 1 bis 4 zeigen eine Behandlungsanlage (1) für Fahrzeuge (2) mit einer optischen Einfahrhilfe (19). Die Behandlungsanlage (1) kann beliebig ausgebildet sein. In der gezeigten Ausführungsform handelt es sich um eine Fahrzeugwaschanlage. Alternativ kann es auch eine Polieranlage oder dgl. andere Anlage sein.

Die Fahrzeugwaschanlage (1) ist in Figur 1 bis 4 schematisch dargestellt. Sie besteht aus ein oder mehreren Portalen (3), in denen unter anderem eine Wascheinrichtung (4) und eine Trockeneinrichtung untergebracht sind. Die Portale (3) sind in der gezeigten Ausführungsform konventionell in U-Form ausgebildet und laufen auf bodenständigen Fahrschienen (20). Alternativ können das oder die Portale (3) auch auf hochliegenden Schienen oder aufgeständerten Schienen in der Art eines Kranes oder dergleichen laufen. Die Wascheinrichtung (4) kann beliebig ausgebildet sind und Sprüheinrichtungen für chemische Produkte, Spülwasser, Hochdruckdüsen, Dach- und Seitenbürsten oder dergleichen andere Aggregate beinhalten. Der Übersichtlichkeit wegen sind in der Zeichnung nur Radwaschbürsten dargestellt.

Die Trockeneinrichtung beinhaltet zumindest eine heb- und senkbare Dachtrockendüse (6). Daneben können ein oder mehrere bewegliche oder stationäre Seitendüsen vorhanden sein. Die Dachtrockendüse (6) kann alternativ auch starr angeordnet sein. In der bevorzugten Ausführungsform hat sie eine vertikale Führung im Portal (3) und einen Hubantrieb. Außerdem können Lichtschranken und dergleichen andere Steuerungselemente für die Dachdüsenbewegung vorhanden sein.

Die Fahrzeugwaschanlage (1) ist in der gezeigten Ausführungsform als Portalwaschanlage in einer Waschhalle (39) untergebracht, die einen Boden (40), eine Decke oder ein Dach (41), eine Einfahrt (17), und gegebenenfalls eine gegenüberliegende Ausfahrt (18) aufweist. Hierbei bewegt sich das mit allen erforderlichen Aggregaten bestückte Portal (3) gegenüber dem stehenden Fahrzeug (2). Das Fahrzeug (2) wird vom Fahrzeuglenker auf einer Einfahrspur (21) in Einfahrtrichtung (16) vor bzw. unter das stehende Portal (3) gefahren. Nach der Wäsche kann das Fahrzeug (2) je nach Anlagengestaltung nach vorin oder rückwärts die Anlage (1) verlassen.

Die Fahrzeugwaschanlage (1) kann alternativ als Tandem- oder Taktanlage ausgebildet sein. Bei einer Tandemanlage sind zwei Portale vorhanden, die hintereinander aufgestellt und mit unterschiedlichen Aggregaten bestückt sind. Die Portale können sich getrennt oder gemeinsam bewegen. Bei einer Taktanlage sind ebenfalls zwei oder mehr Portale hintereinander angeordnet und durch eine bewegliche Zwischenwand in unterschiedliche Behandlungsbereiche getrennt. Der Fahrzeuglenker fährt das Fahrzeug nach Abschluß des ersten Behandlungsvorganges unter das nächste Portal. Die Fahrzeugbewegung kann auch durch eine Schleppeinrichtung erfolgen. Desgleichen sind auch Mischformen dieser Anlagentypen möglich.

Grundsätzlich kann die Fahrzeugwaschanlage (1) beliebig ausgebildet sein.

Die Fahrzeugwaschanlage (1) besitzt eine Einfahrhilfe (19), die als aktive Einfahrhilfe ausgebildet ist. Die aktive Einfahrhilfe (19) hat ein oder mehrere Meßeinrichtungen (12,13) und eine Signaleinrichtung (7) mit Fahrtrichtungshinweisen (10) zur Bedienerführung des Fahrzeuglenkers.

Die Waschanlage (1) kann bei dieser Ausführung in bekannter Weise am Boden (40) mechanische Führungsschienen für die Fahrzeugräder haben. Dies können in der bevorzugten Ausführungsform wegen der optischen Einfahrhilfe (19) aber auch entfallen.

Die in Figur 1 bis 4 gezeigte aktive Einfahrhilfe (19) hat ein oder mehrere Meßeinrichtungen (12,13) und eine Steuerung (14) zur Erfassung und Auswertung der Position und Ausrichtung (30) des Fahrzeuges (2) beim Einfahren in die Fahrzeugbehandlungsanlage (1). Über die Steuerung (14) werden die Signaleinrichtung (7) und die Fahrtrichtungshinweise (10) entsprechend angesteuert.

Die Signaleinrichtung (7) kann in geeigneter Weise den Fahrzeuglenker optisch und/oder akustisch führen. Dabei geben die Fahrtrichtungshinweise (10) dem Fahrzeuglenker bei Fehlstellungen (30) des Fahrzeugs Korrektur- und Lenkhilfen zur Einhaltung der meist mittigen Einfahr-Ideallinie (29) und zur korrekten Einfahrtrichtung. Darüberhinaus kann die Signaleinrichtung (7) weitere Informationen, z.B. zur aktuellen Fahrzeugposition oder zu der noch vorwärts zu fahrenden Streckenlänge etc. übermitteln.

In der Ausführungsform von Figur 1 und 2 sind mehrere Meßeinrichtungen (12,13) vorhanden, die als berührungslose Sensoren (22,23), insbesondere als optische Sensoren ausgebildet sind. Dies können z.B. Lichtschranken, Infrarot-Lichttaster oder dgl. sein.

Wie Figur 1 verdeutlicht, haben die Meßeinrichtungen (12) bzw. Sensoren (22) eine im wesentlichen vertikale Erfassungsrichtung (15). Ferner sind mehrere Meßeinrichtungen (13) bzw. Sensoren (23) mit einer im wesentlichen horizontalen Erfassungsrichtung (15) angeordnet. Die Sensoren (22,23) sind paarweise beidseits der Einfahrspur (21) und in Abständen vor dem Portal (3) angeordnet. Sie befinden sich außerhalb des Portalbewegungsbereichs und sind in geeigneter Weise ortsfest in der Fahrzeugwaschanlage (1) positioniert, z.B. über am Boden befestigte Gestelle, über eine direkte Befestigung an den Hallenwänden, der Hallendecke oder in sonstig geeigneter Weise.

Die Meßeinrichtungen (12) mit der vertikalen Erfassungsrichtung (15) sind vorzugsweise auf die längs laufenden Störkanten (5) des Portals (3) ausgerichtet. Diese Störkanten können in beliebiger Weise entsprechend der Ausbildung des Portals (3) oder der Behandlungseinrichtungen (4,6) festgelegt werden. Wie Figur 1 verdeutlicht, verlaufen z.B. diese vertikalen Störkanten (5) mit etwas Abstand innerhalb der Waschbürsten in Ruhestellung. Gegebenenfalls können auch die seitlichen Trocknungsdüsen oder Hochdruckdüsen (nicht dargestellt) die innere vertikale Störkante und deren Lage gegenüber der Einfahrspur (21) definieren. Über den Fahrweg des Portals (3) längs der Einfahrtrichtung (16) ergibt sich eine Störkantenebene. Die Sensoren (22) der Meßeinrichtungen (12) sind vorzugsweise in dieser Störkantenebene angeordnet, wobei ihre Erfassungsrichtung (15) im wesentlichen in dieser Ebene verläuft. Figur 2 verdeutlicht diese Position. Hier sind beispielsweise vier Sensoren (12) in je zwei Paaren angeordnet.

Mit den vertikal erfassenden Meßeinrichtungen (12) können Schrägstellungen oder ein seitlicher Versatz des Fahrzeuges (2) bereits während des Einfahrens und noch vor Erreichen der Endstellung am Portal (3) festgestellt werden. Figur 2 zeigt dies anhand einer Schrägstellung (30) des Fahrzeuges (2). Hier ragt das rechte Fahrzeugheck in die Störkantenebene (5) hinein und könnte mit dem Portal (3) oder dessen Teilen beim Waschvorgang kollidieren. Der im Heckbereich positionierte rechte hintere Sensor (12) erfaßt die in seinem Strahlbereich (15) liegenden Fahrzeugteile. Die drei anderen Sensoren (12) stellen keine Fahrzeugteile fest und melden einen normalen Betriebszustand. In der Steuerung (14) werden diese eingehenden Sensorsignale ausgewertet, wobei die gezeigte Schräglage (30) festgestellt wird.

Wenn derartige Fehlpositionierungen des Fahrzeuges (2) beim Einfahren festgestellt werden, wird in der Steuerung (14) aufgrund der Signalauswertung und eines geeigneten Programmes die notwendige Korrekturhilfe ermittelt und dem Fahrzeuglenker über Fahrtrichtungshinweise (10) signalisiert. Er erhält dazu ein akustisches, optisches oder in sonstiger Weise geeignetes Signal, daß er das Lenkrad im gezeigten Ausführungsbeispiel nach rechts einschlagen soll, um wieder den seitlichen Versatz und die Schrägstellung zu berichtigen und auf die korrekte Einfahr-Ideallinie (29) zurückzufinden. Sobald die Lenkhilfe Wirkung zeigt und das Fahrzeug wieder die richtige Lage hat, wird der Korrekturhinweis aufgehoben.

Falls der Fahrzeuglenker das Fahrzeug (2) in einer falschen Position abstellt, wird durch die Steuerung (14) ein entsprechender Hinweis an den Fahrzeuglenker über die Signaleinrichtung (7) übermittelt. Außerdem kann die Steuerung (14) die Fahrzeugwaschanlage (1) sperren und den Start des Portals (3) und der Behandlungseinrichtungen (4, 6) verhindern.

Die vertikal erfassende Meßeinrichtung (12) kann außer der gezeigten Schrägstellung auch einen bloßen seitlichen Versatz des Fahrzeuges (2) gegenüber der Ideallinie (29) bei ansonsten gerader Fahrzeugausrichtung feststellen. Dann sind z.B. die beiden rechten Sensoren (12) bedeckt und erfassen Fahrzeugteile. Unter Umständen können sich auch extreme Schieflagen einstellen, bei denen drei Sensoren ansprechen.

Abweichend von der gezeigten Ausführungsform können statt der vier Sensoren (22) oder Meßeinrichtungen (12) mehr oder weniger solcher Meßeinrichtungen vorhanden sein, die zudem auch in der Gestaltung und Anordnung variieren können. Beispielsweise können statt der gezeigten verteilten Einzelsensoren Sensorleisten in einfacher oder mehrfacher Anordnung längs der Störkantenebenen (5) angeordnet sein oder sich quer über die Einfahrspur erstrecken.

In der gezeigten Ausführungsform sind die Sensoren (22) als Infrarot-Lichttaster ausgebildet, die mit Abstand oberhalb des Fahrzeuges (2) und des Anlagenbodens angeordnet sind. Sie strahlen mit einem schmalen Kegel vorzugsweise vertikal nach unten. Diese Ausführung ist besonders betriebssicher sowie wenig bau- und kostenaufwendig. Ohne Fahrzeug oder bei einem korrekt einfahrenden Fahrzeug erfassen sie im Störkantenbereich (5) nur den Fahrzeugboden. Hierfür sind sie bei der Installation der Einfahrhilfe (19) entsprechend ausgerichtet und eingemessen worden.

Die Sensoren (22) fungieren beispielsweise als Abstandsmesser, die über einen Lichtreflex feststellen, ob ein Teil des Fahrzeuges (2) in den Strahlbereich (15) gelangt und einen geringeren Abstand vom Sensor (22) als der Anlagenboden hat.

Alternativ können die Meßeinrichtungen (12) bzw. die Sensoren (22) auch in beliebig anderer geeigneter Weise ausgebildet und positioniert sein. Beispielsweise kann es sich um kapazitive oder induktive Taster oder um Lichtschranken handeln. Desgleichen können statt der besonders betriebssicheren und oben angeordneten Lichttaster auch bodenseitige Tasteinrichtungen vorhanden sein, z.B. bodenseitige Lichttaster.

In der Ausführungsform von Figur 1 und 2 sind außerdem ein oder mehrere vorzugsweise seitlich positionierte Meßeinrichtungen (13) mit einer im wesentlichen horizontalen Erfassungsrichtung (15) vorgesehen. Diese befinden sich ebenfalls paarweise beidseits der Einfahrspur (21) und in Abständen vor dem Portal (3). Sie sind vorzugsweise auf geeigneten bodenseitigen Gestellen angeordnet und in geeigneter Weise als berührungslose Sensoren (23) ausgebildet. In der gezeigten Ausführungsform handelt es sich um Lichtschranken. Alternativ sind beliebig andere geeignete Sensoren (23) möglich.

Die horizontal arbeitenden Meßeinrichtungen (13) erfassen den Fahrzeugvorschub in Einfahrtrichtung (16). Sie sind dazu in entsprechender Höhe angeordnet, um zumindest die Front und die vorderen Seitenbereiche des Fahrzeuges (2) abtasten zu können. Die Signale der Meßeinrichtungen (13) können in der Steuerung (14) mit den Signalen der vertikal erfassenden Meßeinrichtungen (12) kombiniert werden. Dadurch läßt sich die Position und Lage des Fahrzeuges noch besser und genauer feststellen. Insbesondere läßt sich für die Steuerung (14) aus den Werten auch ableiten, wie stark die Fehlstellung ist und wie groß die entsprechenden Korrekturhilfen und Lenkradeinschläge sein müssen. Bei einer entsprechend ausgestalteten Signaleinrichtung (7) können entsprechend graduell abgestufte Lenkhinweise gegeben werden.

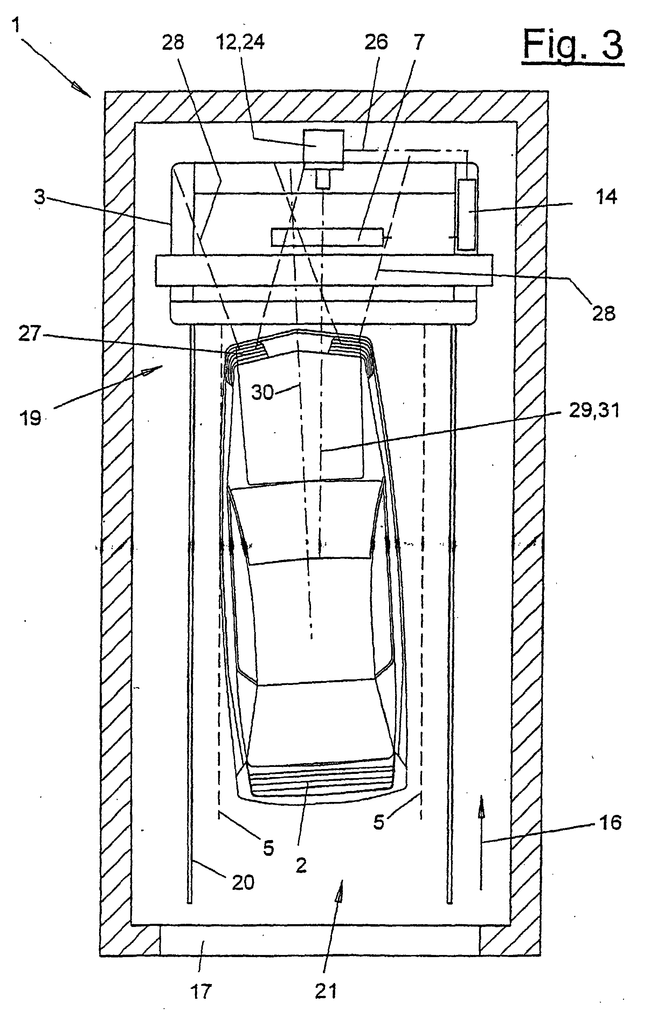

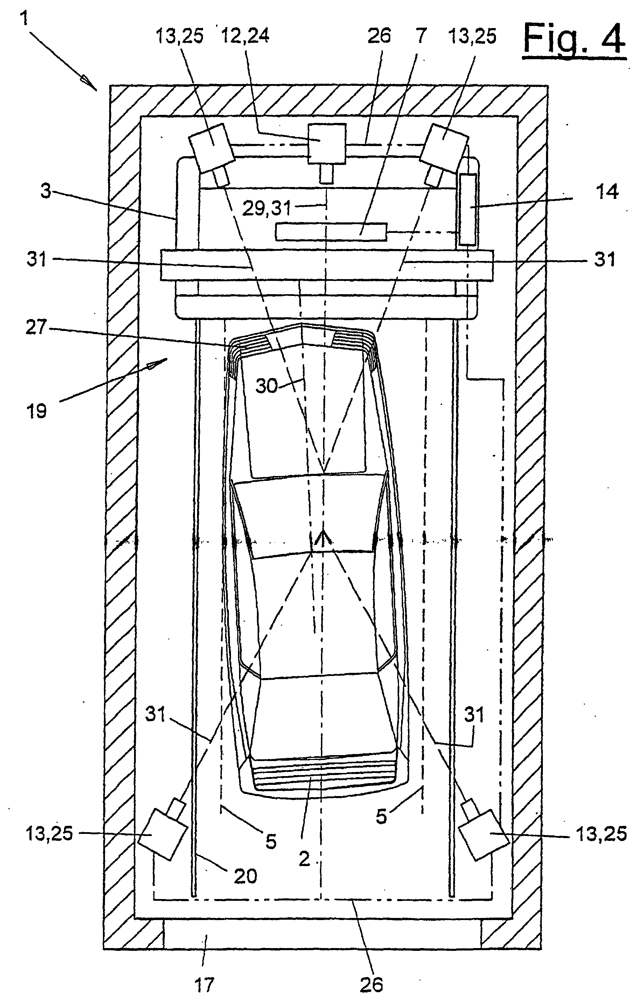

Figur 3 und 4 zeigen eine Variante der aktiven Einfahrhilfe (19) mit einer anderen Ausbildung und Anordnung der Meßeinrichtungen (12,13). Die Meßeinrichtungen (12,13) sind hier als optische Erfassungssysteme (24,25) und insbesondere als Kamerasysteme oder sog. Vision-Systeme ausgebildet. Die optischen Erfassungssysteme (24,25) sind komplexer als die einfachen Sensoren (22,23) im Ausführungsbeispiel von Figur 1 und 2. Die Kameras (24,25) haben eine größere Informationsdichte und können ein Bild des einfahrenden Fahrzeugs (2) aufnehmen. Dabei wird durch Auswertung der optischen Informationen festgestellt, ob sich das Fahrzeug innerhalb des Kamerabildes an der gewünschten Position befindet oder nicht. Falls gegenüber der Soll-Position ein seitlicher Versatz oder eine Verdrehung vorhanden wäre, kann dies in der Steuerung (14) oder auch im optischen Erfassungssystem (24,25) festgestellt und nach Lage und Größe berechnet werden. Die optischen Erfassungssysteme (24,25) sind dazu an einem bekannten Ort und mit einer bekannten Blickrichtung (31) positioniert.

In einer einfachen Ausführungsform haben die Kameras (24,25) eine niedrige Auflösung und erfassen im wesentlichen nur die eingeschalteten Scheinwerfer (27) bzw. die Leuchtkegel (28) des einfahrenden Fahrzeugs (2). Sie werden als zwei gegenüber der helleren Umgebung hervorgehobene helle Lichtpunkte erfaßt. Aus der Position der Scheinwerfer (27) kann der Mittelpunkt des Fahrzeugs errechnet und eine eventuelle Seitenabweichung von der vorgegebenen Einfahr-Ideallinie (29) bestimmt werden.

Durch Speicherung und Vergleich der beim Einfahren sich verändernden Scheinwerferpositionen kann auch die Fahrtrichtung des Fahrzeugs (2) bestimmt werden. Zudem läßt sich durch die optische Erfassungseinrichtung (24,25) auch die Entfernung des Fahrzeugs (2) zum Zielpunkt am Portal (3) ermitteln. In Verbindung mit der niedrigen Auflösung bestehen geringere Anforderungen an die Rechenkapazität der Steuerung (14). Dementsprechend kann der Aufwand bei Hardware und Software gering gehalten werden.

Mit komplexeren und höher auflösenden Kameras (24,25) können auch komplexere Bilder des Fahrzeugs (2) aufgenommen und insbesondere die Ränder der Fahrzeugkarosserie optisch erfaßt und abgetastet werden. Diese Bilddaten lassen sich in der vorerwähnten Weise zur Auswertung von Position und Ausrichtung (30) des Fahrzeugs (2) heranziehen. Darüber hinaus können die erfaßten Konturdaten des Fahrzeugs (2) auch zur Steuerung der Wasch- oder Poliereinrichtung (4) und des Portals (3) herangezogen werden. Damit lassen sich Waschbürsten exakt nach der Position und der Kontur des Fahrzeugs (2) steuern. In ähnlicher Weise können auch Hochdruck-Waschdüsen, Auftragseinrichtungen für Wasser, Spülmittel, Schaum, Reinigungsmittel etc. und Trockendüsen im Dachbereich und an den Seiten des Fahrzeugs gesteuert werden. Außerdem kann über die optischen Erfassungssysteme (24,25) eine visuelle Überwachung des Wasch- oder Poliervorganges durch Verbindung mit einer Überwachungsanlage, z.B. einem Monitor, einem Aufzeichnungsgerät etc., durchgeführt werden. Eventuelle Kollisionen, unzureichende Wasch- oder Polierergebnisse etc. können hierdurch festgestellt und zumindest protokolliert oder gegebenenfalls auch zur Korrektur und nochmaligen Durchführung des Wasch- oder Poliervorganges ausgewertet werden. Außerdem lassen sich über die visuelle Überwachung z.B. Bürstenstellungen gegenüber schwierigen Fahrzeugkonturen, z.B. eingezogenen Dächern, optimieren und an die jeweilige Fahrzeugform anpassen. Diese Funktionen können auch ohne die Funktion als Einfahrhilfe (19) mit Vorteil genutzt werden.

Im Ausführungsbeispiel von Figur 3 ist eine einzelne Kamera (24) als Meßeinrichtung (12) vorgesehen, die vorzugsweise starr angeordnet ist und die im wesentlichen in der Einfahr-Ideallinie (29) positioniert ist. Ihre Blickrichtung (31) ist auf die Einfahrspur (21) bzw. das Fahrzeug (2) gerichtet und erstreckt sich längs der Ideallinien (29). Vorzugsweise ist die Kamera (24) etwa in Höhe des Kühlergrills angeordnet. Sie befindet sich am rückwärtigen Ende der Fahrzeugbehandlungsanlage (1) und kann unter oder hinter dem Portal (3) angeordnet sein. Die Kamera (24) kann in der vorerwähnten Weise eine niedrige Auflösung haben und die Scheinwerfer (27) erfassen. Sie kann alternativ aber auch als das erwähnte komplexere Vision-System zur Erfassung der gesamten Fahrzeugkontur ausgebildet sein.

Mit der einzelnen Kamera (24) können in der vorgeschilderten Weise seitliche Fehlstellungen des Fahrzeugs (2) gegenüber der Ideallinie (29) festgestellt werden. Durch eine Speicherung und einen Vergleich der aufgenommenen Positionsdaten des Fahrzeugs (2) können aber auch Schrägstellungen (30) des einfahrenden Fahrzeugs (2) festgestellt werden.

Figur 4 zeigt eine Variante, in der mehrere Meßeinrichtungen (12,13) und mehrere optische Erfassungssysteme (24,25) vorhanden sind. Das zentrale und in der Ideallinie (29) angeordnete Kamerasystem (24) ist das gleiche wie in Figur 3. Zusätzlich sind rund um die Einfahrspur (21) bzw. das eingefahrene Fahrzeug (2) weitere Kameras (25) positioniert. Dies können wie in Figur 4 gezeigt z.B. zwei beidseits neben der zentralen Kamera (24) angeordnete Kameras (25) sein, die jeweils mit ihren Blickrichtungen (31) schräg auf die Einfahrspur (21) bzw. das Fahrzeug (2) gerichtet sind. Alternativ oder zusätzlich können zwei weitere Kameras (25) nahe des Einlasses (17) angeordnet sein, die jeweils an den Seitenwänden oder im Eckbereich der Fahrzeugbehandlungsanlage (1) positioniert sind und die mit ihren Blickrichtungen (31) von hinten auf das Fahrzeug (2) in der Zielposition gerichtet sind.

Im Ausführungsbeispiel von Figur 3 ist die einzelne Kamera (24) über eine geeignete Leitung, vorzugsweise einen Videobus (26) mit der Steuerung (14) verbunden. Im Ausführungsbeispiel von Figur 4 sind alle fünf Kameras (24,25) durch einen Videobus (26) mit der Steuerung (14) verbunden. Vorzugsweise ist hierbei ein einziger Videobus (26) vorhanden, der auch die einzelnen Kameras (24,25) untereinander verbindet.

Die Kameras (24,25) können ortsfest und starr installiert sein. Sie haben eine bekannte Position und eine vorgegebene, festgelegte Blickrichtung (31). Alternativ oder zusätzlich können einzelne oder alle Kameras (24,25) auch ortsveränderlich oder in sich beweglich, z.B. drehoder schwenkbar, angeordnet sein. Dies kann zur Erfassung der seitlichen Form oder Höhenkontur eines Fahrzeugs beim Einfahren in die Anlage (1) vorteilhaft sein. Hierbei wird die Länge und Höhe sowie die Kontur des Fahrzeugs (2) über Motorhaube, Dach, Heckbereich und Windschutzscheiben erfaßt, gespeichert und für eine geeignete Auswertung mit den vorstehend geschilderten Möglichkeiten herangezogen. Bei beweglichen Kameras (24,25) kann ein geeignetes Meßsystem zur Erfassung der Bewegungen und zur entsprechenden Auswertung bzw. Berichtigung der Kamerameßdaten vorhanden sein.

Die Signaleinrichtung (7) ist in den gezeigten Ausführungsbeispielen in der Portalöffnung unter dem Querträger untergebracht. Vorzugsweise ist sie an der Dachtrockendüse (6) angeordnet und zum Fahrzeuglenker hin gerichtet. Bei einer höhenbeweglichen Dachtrockendüse wird die Signaleinrichtung (7) über die Düsenbewegungen in den Sichtbereich des Fahrers gebracht und hieraus wieder entfernt. Alternativ kann sie aber auch am Portal (3) oder an einer anderen geeigneten Stelle der Fahrzeugbehandlungsanlage (1) angeordnet sein.

Die Signaleinrichtung (7) kann unterschiedlich ausgebildet sein. Im gezeigten Ausführungsbeispiel handelt es sich um eine schaltbare optische Anzeige (8). Diese beinhaltet z.B. eine farbige Ampel (9) mit ein oder mehreren verschiedenfarbigen Leuchten. Durch die Farbgebung rot/grün kann z.B. dem Fahrer signalisiert werden, wie weit er gegenüber dem Portal (3) noch vor fahren kann.

Die Signaleinrichtung (7) hat ein oder mehrere Fahrtrichtungshinweise (10), die in beliebig geeigneter Weise ausgebildet sein können. In Figur 1 handelt es sich um schaltbare, insbesondere beleuchtbare Richtungspfeile (10). Diese weisen z.B. nach links und rechts und signalisieren dem Fahrer, nach welcher Richtung er das Lenkrad einschlagen muß, um die korrekte Parkposition am Portal (3) zu erreichen. Die Pfeile können auch nach oben oder unten gerichtet sein und dem Fahrer angeben, wie weit er noch vorwärts fahren muß. Außerdem können die Pfeile zur Anzeige der Stärke des erforderlichen Lenkeinschlags als Mehrfachpfeile ausgebildet sein bzw. einen Farbwechsel mit der Warnfarbe rot und anderen Farben haben.

Die Signaleinrichtung (7) kann alternativ oder zusätzlich ein oder mehrere schaltbare Schriftfelder (11) aufweisen. In diesem kann dem Fahrer ein beliebiger Text optisch übermittelt werden. Außer Text können auch Bilder oder Symbole signalisiert werden. Das Schriftfeld (11) ermöglicht über eine Laufschrift eine komplette Bedienerführung mit vollständigen Hinweis- oder Anweisungstexten. Es kann als Fahrtrichtungshinweis fungieren. Die übermittelten Informationen können auch einen beliebigen Inhalt haben. Außer den vorerwähnten Einfahrtshinweisen (10) können z.B. auch Informationen über das Waschangebot, den Preis, über Werbung oder dergleichen übermittelt werden.

Die Bedienerhinweise können nicht nur bei der Einfahrt und beim Abstellen des Fahrzeugs gegeben werden. Eine Informationsübermittlung ist auch während des Waschprozesses oder an dessen Ende bei der Ausfahrt möglich. Während des Waschvorgangs kann z.B. der Umfang des gewählten Waschvorgangs und der Stand der einzelnen Behandlungsvorgänge signalisiert werden. Nach erfolgter Wäsche erhält der Fahrer Ausfahrtshinweise, Werbeangebote, eine Danksagung oder dergleichen. Grundsätzlich können die von der Signaleinrichtung (7) übermittelten Hinweise beliebiger Natur sein.

Außer der vorerwähnten optischen Anzeige (8) kann alternativ oder zusätzlich auch eine beliebige andere Anzeige, z.B. eine akustische Anzeige vorhanden sein. Diese besteht aus einer Lautsprechereinrichtung, mit der gesprochene Hinweise, Musik und sonstige akustische Informationen übermittelt werden. Die akustische Anzeige kann auch einen Alarmsummer, eine Sirene oder dergleichen beinhalten.

Die Steuerung (14) ist vorzugsweise als computergestützte, frei programmierbare Steuerung ausgebildet. Die Signaleinrichtung (7) ist ebenfalls mit der Steuerung (14) verbunden und erhält von dieser die Steuersignale zur Betätigung der einzelnen Anzeigeelemente. Hierbei können Beleuchtungen ein- und ausgeschaltet werden, Schriften generiert oder sonstige Schaltvorgänge ausgeschaltet werden. Gegebenenfalls sind auch die Anzeigeelemente der Signaleinrichtung (7) beweglich und lassen sich drehen, klappen oder auf andere Weise in der Lage oder Erscheinungsform verändern.

Zur Ausübung der Signalisierfunktion führt die Dachtrockendüse (6) eigenständige Bewegungen durch. Bei Einfahrtsbereitschaft und betriebsbereiter Fahrzeugwaschanlage (1) ist die Dachtrockendüse (6) soweit nach unten abgesenkt, daß sich die Signaleinrichtung (7) in einem ergonomisch günstigen Sichtbereich vor dem Fahrer befindet. Der Fahrer kann dadurch bei der Einfahrt in gewohnter Weise nach vorn blicken und findet in seinem Blickbereich die nötigen Bedienhinweise und Informationen. Nach erfolgter Positionierung des Fahrzeugs und vor Beginn des Waschprozesses fährt die Dachtrockendüse (6) wieder nach oben in die Ruheposition, in der sie auch vor Spritzwasser geschützt ist. In dieser Stellung kann die Signaleinrichtung (7) unsichtbar oder verdeckt sein.

Am Ende des Waschprozesses kann die Dachtrockendüse (6) wieder abgesenkt werden und bei eingeschalteter Signaleinrichtung (7) dem Fahrer das Ende des Waschprozesses und die Ausfahrtsbereitschaft anzeigen. Wenn die Ausfahrt nach hinten durch den Auslaß (18) erfolgt, wird die Dachtrockendüse (6) rechtzeitig vorher wieder angehoben, um Kollisionen mit dem Fahrzeug (2) zu vermeiden. Dies kann z.B. durch einen Näherungssensor, eine voreingestellte Zeitverzögerungsschaltung oder dergleichen andere geeignete Maßnahme geschehen.

In Variation zu den gezeigten Ausführungsbeispielen von Figur 1 bis 4 ist auch eine Kombination der aktiven Einfahrhilfe (19) mit einer passiven Einfahrhilfe mit ein oder mehreren optischen Leitlinien möglich. Die passive Einfahrhilfe kann mit einer Meßeinrichtung (12,13) kombiniert werden, wobei die optische Leitlinie zusätzlich als Signaleinrichtung (7) arbeitet. Über die Leitlinie können dann Signale an den Fahrzeuglenker übermittelt werden, indem z.B. die Strahlerzeuger pulsieren und die Lichtstrahlen bzw. die von ihnen gebildete Leitlinie blinken oder anderweitig deutliche Helligkeitsunterschiede zeigt. Durch solche optische Effekte kann dem Fahrzeuglenker z.B. eine Gefahrensituation signalisiert werden, falls er auf die Leitlinie alleine nicht richtig reagiert und Lenkfehler beim Einfahren macht. Bei der Projektion von mehreren Leitlinien oder dreidimensionalen Bildern mit Einfahrtrichtern oder dergleichen können die projizierten Leitlinien oder Bilder auch in Abhängigkeit von der Fahrzeugstellung verändert werden und durch optische Veränderungen den Fahrzeuglenker dazu bringen, seinen Lenkeinschlag zu verändern. Der räumliche und optische Einfahrtrichter oder Einfahrtunnel kann dann für den Fahrzeuglenker vermeintlich schräg verlaufen und ihn zu einer nachführenden Lenkbewegung veranlassen.

Die gezeigten Ausführungsbeispiele können in verschiedener Weise abgewandelt werden. Die Meßeinrichtungen (12,13) lassen sich in der Zahl, Anordnung und Ausbildung variieren. Insbesondere können die horizontal arbeitenden Meßeinrichtungen (13) auch entfallen. Bei einem Vision-System mit ein oder mehreren Kameras genügt ohnehin ein einziges System. Die Steuerung und/oder die Signaleinrichtung kann auf andere Weise schaltungstechnisch und in der örtlichen Anordnung mit der oder den Meßeinrichtungen (12,13) gekoppelt sein. Die Meßeinrichtungen und die Anzeige lassen sich unter Umständen auch miteinander kombinieren. Die Meßeinrichtungen können außer der Stellung und Ausrichtung des Fahrzeuges (2) auch zumindest Teile seiner Kontur erfassen, insbesondere der Kontur der Seitenflächen. Diese Meßdaten können gespeichert und in geeigneter Weise für eine Konturensteuerung der Behandlungsaggregate ausgewertet und verwendet werden.

Die Signaleinrichtung kann statt an der Dachtrockendüse an einem beliebigen anderen Dachbehandlungsaggregat angeordnet sein. Dies kann z.B. ein horizontales Hochdruckdüsenrohr, ein Sprührohr zum Auftragen von Schaum, Reinigungsmittel etc., ein Spülrohr oder dergleichen sein. Das Dachbehandlungsaggregat kann auch im wesentlichen stationär angeordnet sein. Es muß keinen Antrieb für Hebe- und Senkbewegungen haben. Die Signaleinrichtung kann in einer weiteren Abwandlung eine eigenständige Führung und einen eigenen Antrieb für die Hebe- und Senkbewegungen aufweisen, so daß sie unabhängig von den anderen Behandlungsaggregaten im Portal bewegbar ist. Die gezeigte Ausführungsform hat demgegenüber allerdings den Vorteil, daß für die Bewegungen der Signaleinrichtung ein ohnehin schon vorhandenes Aggregat nebst Antrieb benutzt werden kann.

### BEZUGSZEICHENLISTE

- 1: Fahrzeugwaschanlage
- 2: Fahrzeug
- 3: Portal
- 4: Wascheinrichtung
- 5: Störkante
- 6: Dachbehandlungsaggregat, Dachtrockendüse
- 7: Signaleinrichtung
- 8: optische Anzeige
- 9: Ampel
- 10: Fahrtrichtungshinweis, Richtungspfeil
- 11: Schriftfeld
- 12: Meßeinrichtung
- 13: Meßeinrichtung
- 14: Steuerung
- 15: Erfassungsrichtung, Strahlrichtung
- 16: Einfahrtrichtung
- 17: Einlaß, Einfahrt
- 18: Auslaß, Ausfahrt
- 19: Einfahrhilfe
- 20: Laufschiene, Fahrschiene
- 21: Einfahrspur
- 22: Sensor, Seitenabstand
- 23: Sensor, Frontstellung
- 24: optisches Erfassungssystem, Kamera
- 25: optisches Erfassungssystem, Kamera
- 26: Videobus
- 27: Scheinwerfer
- .28: Leuchtkegel
- 29: Einfahr-Ideallinie
- 30: Fahrzeugausrichtung, Schrägstellung
- 31: Kamerarichtung, Blickrichtung
- 32: Windschutzscheibe
- 33 34 35: Querjoch

## Patentansprüche

1. Verfahren zum Betrieb einer Fahizeugbehandlungsanlage (1), insbesondere einer Fahrzeugwasch- oder Polieranlage mit mindestens einem Portal (3) und einer Signaleinrichtung (7) zur Bedienerführung des Fahrzeuglenkers, wobei dem Fahmeuglenker beim Einfahren in die Fahrzeugbehandlungsanlage (1) von einer Einfahrhilfe (19) optische Richtungs- und Korrekturhinweise übermittelt werden, **dadurch gekennzeichnet, daß** die Position und Ausrichtung des Fahrzeugs (2) beim Einfahren in die Fahrzeugbehandlungsanlage (1) von mindestens einer Kamera (24, 25) ermittelt und ausgewertet wird, welche unter oder hinter dem Portal (3) angeordnet und im wesentlichen in der Einfahr-Ideallinie (29) mit Blickrichtung (31) zum einfahrenden Fahrzeug (2) positioniert ist, wobei von der Einfahrhilfe (19) bei Abweichungen von der vorgegebenen Position und Ausrichtung über eine Signaleinrichtung (7) spezifische Fahrtrichtungs- und Korrekturhinweise übermittelt werden.

2. Fahrzeugbehandlungsanlage, insbesondere Fahrzeugwasch- oder Polieranlage mit mindestens einem Portal (3) und einer Signaleinrichtung (7) zur Bedienerführung des Fahrzeuglenkers, wobei die Fahrzeugbehandlungsanlage (1) eine Einfahrhilfe (19) aufweist, die dem Fahrzeuglenker beim Einfahren in die Fahrzeugbehandlungsanlage (1) optische Richtungs- und Korrekturhinweise übermittelt, **dadurch gekennzeichnet, daß** die Einfahrhilfe (19) mindestens eine Kamera (24, 25) aufweist, welche unter oder hinter dem Portal (3) angeordnet und im wesentlichen in der Einfahr-Ideallinie (29) mit Blickrichtung (31) zum einfahrenden Fahrzeug (2) positioniert ist, sowie eine Steuerung (14) zur Erfassung und Auswertung der Position und Ausrichtung des Fahrzeugs (2) beim Einfahren und die mit der Steuerung (14) verbundene Signaleinrichtung (7) mit Fahrtrichtungshinweisen (10).

3. Fahrzeugbehandlungsanlage nach Anspruch 2, **dadurch gekennzeichnet, daß** mehrere Kameras (24, 25) verteilt und mit unterschiedlichen Blickrichtungen (31) zur Einfahrspur (21) angeordnet sind.

4. Fahrzeugbehandlungsanlage nach einem der Ansprüche 2 oder 3, **dadurch gekennzeichnet, daß** zumindest eine Kamera (24, 25) die hellen Scheinwerfer (27) des Fahrzeugs (2) erfaßt und vermißt.

5. Fahrzeugbehandlungsanlage nach einem der Ansprüche 2 bis 4, **dadurch gekennzeichnet, daß** die Signaleinrichtung (7) in der Öffnung des Portals (3) angeordnet und heb- und senkbar geführt und angetrieben ist.

6. Fahrzeugbehandlungsanlage nach einem der Ansprüche 2 bis 5, **dadurch gekennzeichnet, daß** die Signaleinrichtung (7) an einem Dachbehandlungsaggregat (6), vorzugsweise an einer Dachtrockendüse (6) angeordnet ist.

7. Fahrzeugbehandlungsanlage nach einem der Ansprüche 2 bis 6, **dadurch gekennzeichnet, daß** die Signaleinrichtung (7) ein oder mehrere schaltbare Richtungspfeile (10) und/oder ein oder mehrere schaltbare Schriftfelder (11) aufweist.

## Claims

1. Method for operation of a vehicle treatment installation (1), in particular a vehicle washing or polishing installation with at least one portal (3) and a signalling device (7) for operational guidance for the vehicle driver, whereby visual direction and correction instructions are transmitted to the vehicle driver by a drive-in aid (19) when driving into the vehicle treatment installation (1), **characterised in that** the position and alignment of the vehicle (2) when driving into the vehicle treatment installation (1) are established and evaluated by at least one camera (24, 25) which is located under or behind the portal (3) and is essentially positioned in the ideal drive-in line (29) viewing in the direction (31) to the vehicle (2) driving in, whereby specific driving direction and correction instructions are transmitted by the drive-in aid (19) by means of a signalling device (7) in the event of deviation from the predetermined position and alignment.

2. Vehicle treatment installation, in particular vehicle washing or polishing installation with at least one portal (3) and a signalling device (7) for operational guidance for the vehicle driver, whereby the vehicle treatment installation (1) exhibits a drive-in aid (19) which transmits visual direction and correction instructions to the vehicle driver when driving into the vehicle treatment installation (1), **characterised in that** the drive-in aid (19) exhibits at least one camera (24, 25) which is located under or behind the portal (3) and is essentially positioned in the ideal drive-in line (29) viewing in the direction (31) to the vehicle (2) driving in, and a control system (14) to detect and evaluate the position and alignment of the vehicle (2) when driving in and the signalling device (7) with driving direction instructions (10) connected to the control system (14).

3. Vehicle treatment installation according to claim 2, **characterised in that** a plurality of cameras (24, 25) are distributed and arranged with different viewing directions (31) to the drive-in track (21).

4. Vehicle treatment installation according to one of claims 2 or 3, **characterised in that** at least one camera (24, 25) detects and measures the illuminated headlamps (27) of the vehicle (2).

5. Vehicle treatment installation according to one of claims 2 to 4, **characterised in that** the signalling device (7) is located in the opening of the portal (3) and guided and driven so that it can be raised and lowered.

6. Vehicle treatment installation according to one of claims 2 to 5, **characterised in that** the signalling device (7) is located on a roof treatment unit (6), preferably on a roof drying nozzle (6).

7. Vehicle treatment installation according to one of claims 2 to 6, **characterised in that** the signalling device (7) exhibits one or more switchable direction arrows (10) and/or one or more switchable text boxes (11).

## Revendications

1. Procédé d'exploitation d'une installation de traitement de véhicule (1), en particulier d'une installation de lavage de véhicule ou de polissage comportant au moins un portique (3) et un dispositif de signalisation (7) pour guider les manoeuvres du conducteur du véhicule, dans lequel il est transmis au conducteur du véhicule, à l'entrée dans l'installation de traitement de véhicule (1), par une aide à l'entrée (19), des indications optiques de direction et de correction, **caractérisé en ce que** la position et l'orientation du véhicule (2) sont déterminées et évaluées à l'entrée dans l'installation de traitement de véhicule (1), par au moins une caméra (24, 25) qui est disposée sous ou derrière le portique (3) et qui est sensiblement positionnée dans la ligne idéale d'entrée (29) avec sens de visée (31) vers le véhicule (2) entrant, des indications spécifiques du sens de marche et de correction étant transmises par l'aide à l'entrée (19), à travers un dispositif de signalisation (7), en cas d'écarts par rapport à la position et à l'orientation prédéterminées.

2. Installation de traitement de véhicule, en particulier installation de lavage de véhicule ou de polissage comportant au moins un portique (3) et un dispositif de signalisation (7) pour guider les manoeuvres du conducteur du véhicule, l'installation de traitement de véhicule (1) comportant une aide à l'entrée (19) qui transmet des indications optiques de direction et de correction au conducteur du véhicule, à l'entrée dans l'installation de traitement du véhicule(1), **caractérisée en ce que** l'aide à l'entrée (19) comporte au moins une caméra (24, 25) qui est disposée sous ou derrière le portique (3) et qui est positionnée sensiblement dans la ligne idéale d'entrée (29) avec sens de visée (31) vers le véhicule entrant (2), ainsi qu'une commande (14) pour détecter et évaluer la position et l'orientation du véhicule (2) à l'entrée, et le dispositif de signalisation (7) relié à la commande (14), avec des indications du sens de marche (10).

3. Installation de traitement de véhicule selon la revendication 2, **caractérisée en ce que** plusieurs caméras (24, 25) sont disposées réparties et avec des sens de visée (31) différents vers la piste d'entrée (21).

4. Installation de traitement de véhicule selon l'une des revendications 2 ou 3, **caractérisée en ce qu'**au moins une caméra (24, 25) détecte et mesure les phares clairs (27) du véhicule (2).

5. Installation de traitement de véhicule selon les revendications 2 à 4, **caractérisée en ce que** le dispositif de signalisation (7) est disposé dans l'ouverture du portique (3) et est guidé et entraîné de manière à pouvoir être relevé et abaissé.

6. Installation de traitement de véhicule selon l'une des revendications 2 à 5, **caractérisée en ce que** le dispositif de signalisation (7) est disposé sur un groupe de traitement de toit (6), de préférence sur une buse de séchage de toit (6).

7. Installation de traitement de véhicule selon l'une des revendications 2 à 6, **caractérisée en ce que** le dispositif de signalisation (7) comporte une ou plusieurs flèches de direction (10) qui peuvent être mises en service ou hors service et/ou un ou plusieurs panneaux d'inscription (11) qui peuvent être mis en service ou hors service.
